# EUROPÄISCHE PATENTSCHRIFT

(11) **EP 2 066 429 B1**
(45) Veröffentlichungstag und Bekanntmachung des Hinweises auf die Patenterteilung: **16.11.2011**
(21) Anmeldenummer: 07803512.8
(22) Anmeldetag: 17.09.2007
(51) Int. Cl.: B01F 3/08, B01F 5/02, B01F 5/10, B01J 19/24, B01J 19/26, F04F 5/10, B01F 1/00

(54) **VERFAHREN ZUM DURCHMISCHEN EINER IN EINEM ABGESCHLOSSENEN BEHÄLTER BEFINDLICHEN FLÜSSIGKEIT BZW. MISCHUNG BESTEHEND AUS FLÜSSIGKEIT UND EINEM FEINTEILIGEN FESTSTOFF UNTER VERWENDUNG EINER EJEKTORSTRAHLDÜSE**
METHOD FOR MIXING A LIQUID OR A MIXTURE CONSISTING OF A LIQUID AND A FINE-PARTICLE SOLID STORED IN A SEALED CONTAINER, USING AN EJECTOR JET
PROCÉDÉ POUR MÉLANGER, DANS UN CONTENANT FERMÉ, UN LIQUIDE OU BIEN UN MÉLANGE COMPOSÉ D'UN LIQUIDE ET DE FINES PARTICULES SOLIDES EN UTILISANT UN ÉJECTEUR

(30) Priorität: 21.09.2006 DE 102006045089; 21.09.2006 US 846094 P
(43) Veröffentlichungstag der Anmeldung: 10.06.2009
(73) Patentinhaber: BASF SE, 67056 Ludwigshafen (DE)
(72) Erfinder: BLECHSCHMITT, Michael, 67105 Schifferstadt (DE); HAMMON, Ulrich, 68163 Mannheim (DE); MARTIN, Friedrich-Georg, 69124 Heidelberg (DE); MÜLLER-ENGEL, Klaus Joachim, 76297 Stutensee (DE); ZEHNER, Peter, 67273 Weisenheim Am Berg (DE)
(86) Internationale Anmeldenummer: PCT/EP2007/059747
(87) Internationale Veröffentlichungsnummer: WO 2008/034778

(56) Entgegenhaltungen:
- EP-A- 0 419 419
- EP-A- 0 856 491
- DE-A1- 2 410 570
- JP-A- 62 225 242
- US-A- 4 014 961

## Beschreibung

Vorliegende Erfindung betrifft ein Verfahren zum Durchmischen einer in einem im wesentlichen abgeschlossenen Behälter mit der Maßgabe befindlichen Flüssigkeit oder Mischung aus einer Flüssigkeit und einem feinteiligen Feststoff, dass die Flüssigkeit oder die Mischung das von einer fluiden Phase einnehmbare Innenvolumen des Behälters nur teilweise ausfüllt und das dabei verbleibende restliche einnehmbare Innenvolumen des Behälters von einer Gasphase ausgefüllt wird, umfassend ein Zuführen von der im wesentlichen gleichen Flüssigkeit oder der im wesentlichen gleichen Mischung in den Behälter als Treibstrahl einer im Behälter in der Flüssigkeit oder in der Mischung befindlichen, eine Treibdüse und einen Impulsaustauschraum, in den der Ausgang der Treibdüse zeigt, aufweisenden Strahldüse.

Die Lagerung von Flüssigkeiten oder von Mischungen aus einer Flüssigkeit und einem feinteiligen Feststoff in im wesentlichen abgeschlossenen Behältern ist allgemein bekannt (z. B. zum Zweck der Bevorratung). Üblicherweise werden solche Behälter auch als Tank bezeichnet. Normalerweise sind die Behälter nicht völlig abgeschlossen, sondern weisen in der Regel z. B. wenigstens eine Entnahmestelle auf, über die z. B. mittels einer Pumpe bei Bedarf vom im Behälter gelagerten Inhalt entnommen werden kann. In entsprechender Weise weist der Behälter üblicherweise auch wenigstens eine Zufuhrstelle auf, über die dem Behälter der zu lagernde Inhalt zugeführt werden kann. Absperrorgane (z. B. Ventile oder Kugelhähne) ermöglichen dabei normalerweise das Ein- und Auslassen der Flüssigkeit bzw. der Mischung und gewährleisten gleichzeitig die Dichtheit in Ruhestellung. In ähnlicher Weise können in den Behälter Instrumente zur Messung von Temperatur, Füllstand und Druck im Tank (Behälter) eingeführt sein.

Normalerweise füllt die im Tank zu lagernde Flüssigkeit oder Mischung aus einer Flüssigkeit und einem feinteiligen Feststoff das im Tank von einer fluiden (gasförmig oder flüssig) Phase einnehmbare Innenvolumen nicht vollständig aus. Vielmehr wird aus den unterschiedlichsten Gründen eine Teilmenge dieses Innenvolumens von einer Gasphase eingenommen. Erfolgt die Lagerung der Flüssigkeit oder Mischung bei Atmosphärendruck, kann der im wesentlichen abgeschlossene Behälter auf der Gasphasenseite grundsätzlich (z. B. über ein über eine Fackel (oder ein sonstiges Abgasreinigungssystem (z. B. eine Gaswäsche) führendes Abgassystem) zur Atmosphäre hin geöffnet sein. Der Öffnungsquerschnitt ist dabei normalerweise so bemessen, dass er einerseits möglichst gering und andererseits so beschaffen ist, dass der Gasausgleich beim Befüllen und Entleeren des Behälters ohne nennenswerten Druckverlust erfolgt. In typischer Weise sind die mittleren Durchmesser solcher Öffnungsquerschnitte ≤ 25 cm (bei Füllvolumen von typisch ≥ 100 m³, häufig bis 10 000 m³). Alternativ sind üblicherweise Einrichtungen zur Druckentlastung bei unzulässigem Überdruck oder Unterdruck, die bis zum Ansprechdruck, der sowohl bei oder oberhalb als auch unterhalb von Atmosphärendruck liegen kann, dicht abschließen, ebenfalls in die relevanten Lagerbehälter eingebaut (z. B. Rückschlagklappen). Häufig wird in den Lagertank zur kontinuierlichen Bestimmung des Füllstandes auf vorgegebenen Höhen in der Gas-und in der Flüssigphase eine geringe Menge eines Messgases zudosiert (bezogen auf das Volumen der Gasphase im Behälter in der Regel ≤ 1 Vol.-%/h). Aus der Differenz des diesbezüglich jeweils erforderlichen Zudosierungsdrucks ergibt sich bei bekanntem Füllinhalt unmittelbar der Füllstand.

Vielfach ist es nun erforderlich, dass der über die Zeit durch Entnahme und/oder Zugabe variable Füllinhalt eines solchen Lagertanks von Zeit zu Zeit oder stetig durchmischt wird, um seine Homogenität zu erhöhen bzw. zu gewährleisten. Dies kann ursächlich aus den unterschiedlichsten Gründen erfolgen. Ist der Füllinhalt des Behälters eine Mischung aus einer Flüssigkeit und einem feinteiligen Feststoff (z. B. eine Aufschlämmung), besteht häufig das Risiko, dass sich der feinteilige Feststoff während der Lagerung im Tank unter der Einwirkung der Schwerkraft absetzt und der Tankinhalt sich so im Lauf der Zeit entmischt. Bei einer Entnahme aus dem Lagertank würde dann gegebenenfalls z. B. nicht mehr das gewünschte Gemisch, sondern nur noch die in diesem enthaltene Flüssigkeit entnommen. Beispiele für vorgenannten Fall sind unter anderen wässrige Polymerisatsuspensionen. Je nach spezifischem Gewicht der flüssigen Phase kann der in dieser in disperser Verteilung enthaltene feinteilige Feststoff aber auch aufrahmen und sich in der Phasengrenze flüssig/gasförmig anreichern. Ein möglicher Beispielfall dafür bilden Polymerisatdispersionen (auch wässrige Polymerisatdispersionen).

Wird im Tank (Behälter) nur eine Flüssigkeit gelagert, kann diese ebenfalls mehrphasig sein (z. B. eine Emulsion; beispielhaft angeführt seien Öl-in-Wasser-Emulsionen sowie Wasser-in-Öl-Emulsionen) und bei längerem Lagern ohne Zwischenhomogenisierung entmischen, was normalerweise unerwünscht ist.

Aber auch eine chemisch homogene Flüssigkeit kann beim Lagern unerwünschte physikalische Inhomogenitäten ausbilden. Diese können beispielsweise aus einer inhomogenen Temperaturverteilung (z. B. durch einseitige Sonnenbestrahlung des Tanks bedingt) bestehen. Konsequenz einer solchen kann z. B. eine unerwünschte Kristallbildung oder eine nicht angestrebte Zersetzung der gelagerten Flüssigkeit sein. Häufig wird zum Zweck der Einhaltung einer gewünschten Lagertemperatur auch kontinuierlich eine Teilmenge der gelagerten Flüssigkeit entnommen, über einen vorzugsweise indirekten Wärmeaustauscher geführt und anschließend in den Lagertank rückgeführt. In diesem Fall strebt der Lagerhalter üblicherweise einen möglichst raschen Temperaturausgleich zwischen noch im Lagerbehälter befindlicher Flüssigkeit und in selbigen über den Wärmeaustauscher rückgeführter Flüssigkeit durch geeignete rasche Durchmischung an.

Zur sicheren Lagerung von radikalisch polymerisierbaren Verbindungen (oder diese enthaltende Lösungen) wie z. B. Acrolein, Methacrolein, Acrylsäure, Methacrylsäure und/oder deren Ester (insbesondere die C₁- bis C₈-Alkylester) ist nicht nur eine sorgfältige Temperaturkontrolle des flüssigen Tankinhalts erforderlich. Vielmehr müssen den vorgenannten, in der Regel wenigstens einfach ethylenisch ungesättigten, organischen Verbindungen (Monomeren) sogenannte Inhibitoren (Radikalfänger) zugesetzt werden, um das Eintreten einer zufällig initiierten, unerwünschten radikalischen Polymerisation zu verhindern bzw. zu unterbinden. Vielfach entfalten solche Inhibitoren ihre volle Wirkung nur im Beisein von molekularem Sauerstoff (der seinerseits selbst Inhibitor sein kann). Aus diesem Grund werden solche Monomeren normalerweise unter einer molekularen Sauerstoff enthaltenden Gasatmosphäre gelagert (vgl. z. B. WO 2005/049543 und US-A 6,910,511) und es ist dafür Sorge zu tragen, dass das flüssige Monomere (bzw. dessen Lösung) an dem darin gelösten molekularen Sauerstoff nicht verarmt. Letzteres kann z. B. dann eintreten, wenn das Monomere temporär lokal auskristallisiert und nachfolgend wieder in Lösung geht. Der dabei resultierenden lokalen Verarmung an molekularem Sauerstoff kann gleichfalls durch entsprechendes Durchmischen entgegenwirkt werden.

Sollte trotz der vorbeschriebenen Vorsichtsmaßnahmen eine unerwünschte radikalische Polymerisation des Tankinhalts ausgelöst werden, kann einer solchen dadurch entgegengetreten werden, dass man dem Tankinhalt in möglichst kurzer Zeit ein Mittel zur Sofortbeendigung der radikalischen Polymerisation zusetzt und dieses über den Tankinhalt möglichst rasch verteilt (vgl. z. B. WO 00/64947, WO 99/21893, WO 99/24161, WO 99/59717). Auch in diesem Fall ist eine möglichst gleichmäßige und rasch ausführbare Durchmischung des Tankinhalts nach erfolgter Mittelzugabe erforderlich.

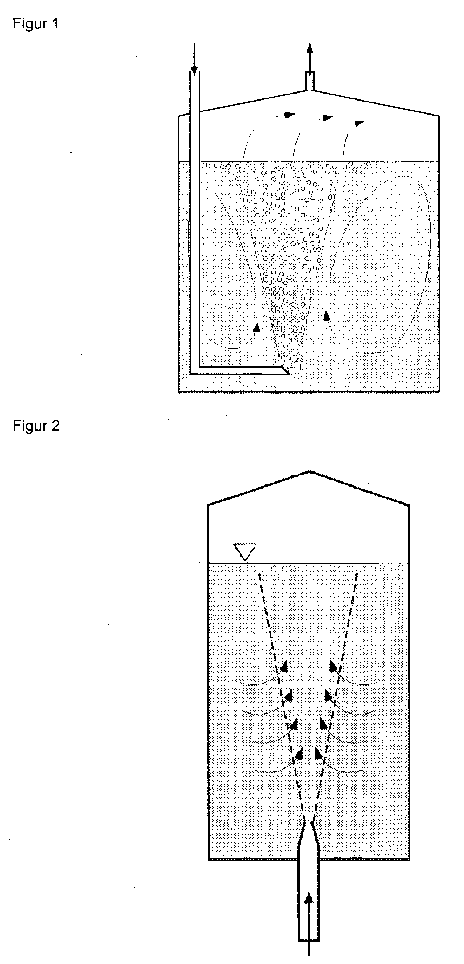

Grundsätzlich kann der flüssige Inhalt eines Tanks dadurch durchmischt werden (vgl. Figur 1), dass man z. B. in Bodennähe ein geeignetes Gas in den Tank einperlt oder eindüst (z. B. durch einen "Duschkopf"). Die im flüssigen Tankinhalt aufsteigenden Gasblasen bewerkstelligen die erwünschte Durchmischung in dem sie Flüssigkeit mitreißen. Der gesamte (im Grundsatz nimmt die Mischwirkung sogar von unten nach oben zu) flüssige Behälterinhalt wird dadurch unabhängig von der Höhe des Flüssigkeitsstandes von einer großräumigen Strömung erfasst und gut vermischt. Nachteilig an einer solchen Verfahrensweise ist jedoch der (im großtechnischen Maßstab werden zum Vermischen des Tankinhalts vergleichsweise große Gasvolumenströme benötigt) während des Durchmischens stetige Bedarf an einem geeigneten Mischgas. Dieses muss im übrigen wieder stetig aus dem Tank herausgeführt werden. Beim Durchperlen durch den zu durchmischenden flüssigen Tankinhalt sättigt es sich darüber hinaus normalerweise mit der im Tank befindlichen Flüssigkeit und kann aufgrund dieser Beladung (z. B. im Fall einer gelagerten organischen Flüssigkeit) häufig nicht in einfacher Weise in die Umwelt entlassen werden. Vielmehr ist in den meisten Fällen deshalb eine vergleichsweise aufwendige (teure) Abgasbehandlung (z. B. Verbrennung (das beim Befüllen des Tanks in notwendiger Weise entweichende Gas wird in diesen Fällen in zweckmäßiger Weise in einer Fackel verbrannt) oder Waschung) erforderlich. Prinzipiell kann das aus dem Tank herausgeführte Mischgas zum Durchperlen des flüssigen Inhalts desselben auch wieder in diesen rückgeführt werden. In nachteiliger Weise bedarf es dazu jedoch in notwendiger Weise eines separaten Kreisgaskompressors, der das Abgas auf den Druck am Behälterboden rückverdichtet. Derartige Kompressoren sind nicht nur teuer, sondern verursachen auch einen hohen Wartungsaufwand sowie einen nicht unerheblichen Energiebedarf.

Alternativ kann der Tankinhalt mittels eines Rührers durchmischt werden. Dazu bedarf es jedoch einer separaten Antriebsquelle sowie einer durch die Behälterwand geführten Antriebswelle. Die Abdichtung von durch eine Behälterwand geführten rotierenden Elementen erweist sich jedoch generell als besonders schwierig. Im übrigen ist bei großen Füllvolumina eines Tanks (großtechnische Füllvolumina betragen für Lagertanks in typischer Weise 100 m³ bis 10 000 m³, häufig 200 bis 1 000 m³ oder 300 bis 800 m³, charakteristisch 500 m³) die Fertigung eines Rührers bereits vergleichsweise kostspielig.

Vor diesem Hintergrund hat es sich als zweckmäßig erwiesen, zur Durchmischung des flüssigen Tankinhalts demselben mit der zur Tankentnahme verfügbaren Pumpe eine Teilmenge der im Tank (Behälter) gelagerten Flüssigkeit oder Mischung aus einer Flüssigkeit und einem feinteiligen Feststoff zu entnehmen und wenigstens einen Teil der entnommenen Teilmenge über eine in Bodennähe des Tanks befindliche und nach oben gerichtete Treibdüse (in einfachster Weise ein Strömungskanal mit in Strömungsrichtung sich verjüngendem Querschnitt, in dem die Druckenergie einer hindurch strömenden Flüssigkeit verlustarm in zusätzliche Bewegungsenergie umgewandelt und der Flüssigkeitsstrom dadurch beschleunigt wird) als (Treibflüssigkeit) flüssigen Strahl (Treibstrahl) in den Tank zurückzuführen.

Hierbei saugt der nach oben gerichtete flüssige Strahl nach den Gesetzen des Freistrahls längs seines Weges durch die im Tank befindliche Flüssigkeit von selbiger an und die flüssigen Medien vermischen sich.

Alternativ oder zusätzlich kann zum Zweck der Durchmischung auch das Auffüllen (Nachbefüllen aber auch Erstbefüllen) des Behälters mit der Flüssigkeit oder Mischung so erfolgen, dass die Flüssigkeit oder Mischung über eine vorgenannte Treibdüse zugeführt wird.

Nachteilig an dieser Art und Weise der Durchmischung ist jedoch, dass die Mischwirkung des Freistrahls nur einen vergleichsweise beschränkten Raum um ihn herum erfasst, so dass die erzielte Mischwirkung normalerweise nicht voll zu befriedigen vermag (Figur 2).

Ein weiterer Nachteil besteht darin, dass der flüssige Strahl (insbesondere bei sinkendem Füllstand im Tank) aufgrund seiner vergleichsweise hohen mittleren Impulsdichte (bzw. Geschwindigkeit) vergleichsweise leicht aus der im Tank befindlichen flüssigen Phase austritt (den Trennspiegel zwischen flüssiger und gasförmiger Phase durchbricht) und mit diesem Austritt gegebenenfalls eine intensive Tröpfchenbildung (Spraybildung) innerhalb der Gasphase einhergeht. Dies ist insbesondere dann von Nachteil, wenn der Tankinhalt eine organische Flüssigkeit (z. B. Acrolein, Methacrolein, Acrylsäure, Methacrylsäure, die Ester dieser Säuren oder andere organische Monomere) umfasst, deren Gasphase im Beisein von molekularem Sauerstoff explosiv sein kann (vgl. z. B. DE-A 10 2004 034 515). Zum einen erhöhen die feinverteilten Tröpfchen in der Gasphase deren Gehalt an organischem Material, wodurch aus einer zuvor gegebenenfalls nicht zündfähigen Gasphase eine zündfähige wird und die gebildeten Tröpfchen erfahren auf ihrem Flug durch die Gasphase reibungsbedingt regelmäßig eine elektrische Aufladung ihrer Oberfläche. In der Folge daraus erwachsende Funkenentladung vermag die Zündung auszulösen. Handelt es sich bei den Tröpfchen um solche einer wässrigen Polymerisatdispersion, können diese aber auch z. B. auf ihrem Weg durch die Gasphase in unerwünschter Weise irreversible verfilmen und bei späteren Verwendungen der Polymerisatdispersion stören.

Handelt es sich beim Tankinhalt um die Aufschlämmung eines feinteiligen Feststoffs in einer Flüssigkeit, vermag der mit dem durch den Trennspiegel durchbrechende Strahl auf die Behälterinnenwand geschleuderte Feststoff gegebenenfalls auf selbiger anzuhaften, wodurch er der im Behälter gelagerten Schlämme entzogen wird.

Aber auch bei einer sonstigen Flüssigkeit ist eine sich wie vorstehend beschrieben einstellende Spraybildung u. a. insofern von Nachteil, als die kleinen Spraytröpfchen einen erhöhten Dampfdruck aufweisen. Es kommt dadurch zu unerwünschter Verdampfungskühlung, die die Temperaturkonstanz des Tankinhalts beeinträchtigt.

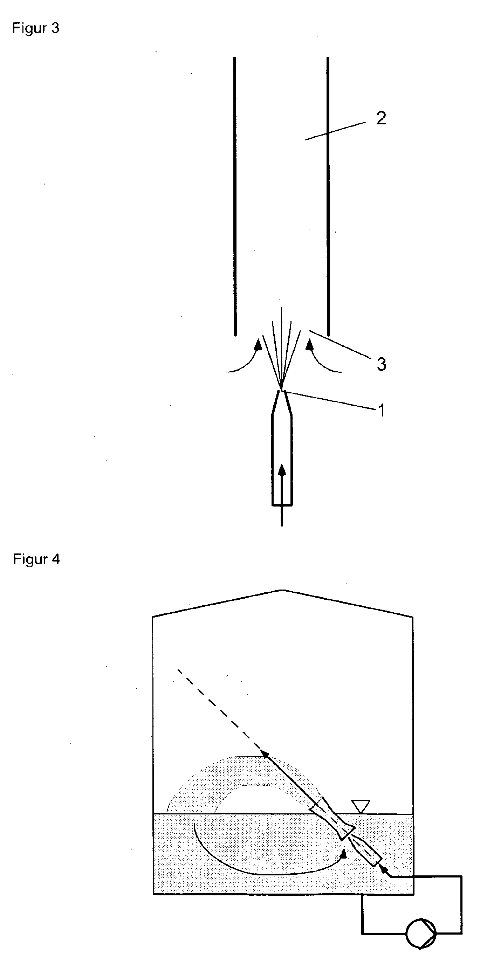

Um die Vermischung zu intensivieren (vgl. Chemie-Ing. Techn. 42. Jahrg. 1970, S. 474 bis 479) wurde im Stand der Technik gemäß der Figur 3 dieser Anmeldung hinter der Treibdüse (1) ein (am Ein- und Austritt offener) Mischraum (2) angeordnet (die numerischen Adressen beziehen sich stets auf die Figuren dieser Anmeldung). Dadurch wird die im Tankraum befindliche Flüssigkeit nicht wie beim Freistrahl längs des Strahlweges angesaugt, sondern die nach dem Impulssatz geförderte Menge muss durch einen Eintritt (bzw. eine Ansaugöffnung) (3) zum Eintrittsquerschnitt des Mischraums (im weiteren vereinfacht auch als Impulsaustauschraum oder als Impulsaustauschrohr bezeichnet; der Querschnitt muss aber nicht in notwendiger Weise kreisrund sein; die rohrförmige Ausführungsform ist jedoch anwendungstechnisch zweckmäßig) eintreten. Diese Anordnung von Treibdüse und Mischraum (der z. B. als kurzes Rohr mit größerem Querschnitt der Treibdüse nachgeschaltet ist) soll im weiteren als Strahldüse bezeichnet werden. Bei ihr tritt der Treibstrahl mit vergleichsweise hoher Geschwindigkeit in einen im Vergleich zum Tankvolumen verhältnismäßig kleinen Impulsaustauschraum (häufig beträgt das Volumen des Impulsaustauschraums nur ca. 0,0001 % bis 1 % des Tank-innenvolumens) und saugt dabei eine Wälzmenge der im Tank befindlichen Flüssigkeit an. Hersteller von solchermaßen geeigneten Strahldüsen ist z. B. die GEA Wiegand GmbH in D-76275 Ettlingen.

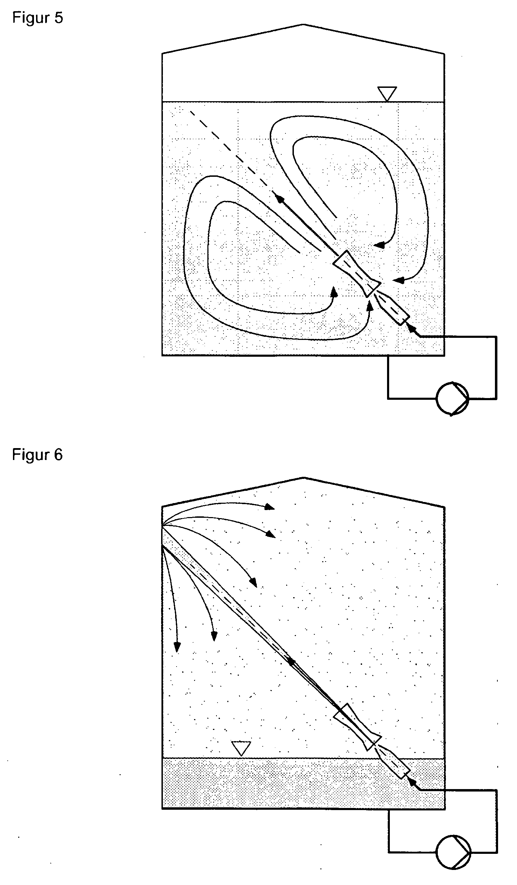

Das aus dem Impulsaustauschrohr ausströmende Gemisch weist einen im Vergleich zum Treibstrahl bereits deutlich abgeschwächten Impuls seiner Elemente (eine verminderte mittlere Impulsdichte) auf, was die vorbeschriebene Austrittswahrscheinlichkeit mit Tröpfchenbildung (Spraybildung) mindert (sie wird erst bei vergleichsweise niedrigerem Stand des Trennspiegels und mit abgeschwächter mittlerer Austrittsimpulsdichte eintreten; vgl. Figur 4). Gemeinsam mit dem von unten wirkenden Ansaugen bildet das nach oben gerichtete Ausströmen aus dem Impulsaustauschrohr großräumige zirkulare Strömungsfelder mit geschlossenen Feldlinien gemäß Figur 5, die bei schräg nach oben gerichteter und im Tank vorzugsweise leicht erhöht angebrachter Strahldüse (vgl. z. B. Acrylate Esters, A Summary Of Safety And Handling, 3rd Edition, 2002, compiled by Atofina, BASF, Celanese, Dow und Rohm & Haas) eine im Vergleich zur Treibdüse verbesserte (insbesondere vollständigere) Durchmischung bedingen, die jedoch noch Verbesserungspotential aufweist. Sinkt der Füllstand (der Trennspiegel) darüber hinaus unter das Ansaugniveau, tritt der Treibstrahl auch hier ungehindert durch das Impulsaustauchrohr und verspritzt (versprüht) zu feinteiligen Tröpfchen mit den bereits beschriebenen Risiken (Figur 6). In der Regel muss die Treibstrahlflüssigkeit vor ihrem Eintritt in die Strahldüse daher in der Regel durch Ventile fließen, die sich bei Unterschreitung eines vorgegebenen Füllstandes im Tank verschließen und ihre Durchströmung unterbinden.

Angesichts dieses Standes der Technik bestand die Aufgabe darin, ein verbessertes Verfahren zum Durchmischen einer flüssigen Tankbefüllung zur Verfügung zu stellen, das auf alle vorstehend beschriebenen Problemfälle anwendbar ist und nicht zuletzt auch ein rascheres Durchmischen ermöglicht.

Demgemäß wird ein Verfahren zum Durchmischen einer in einem im wesentlichen abgeschlossenen Behälter mit der Maßgabe befindlichen Flüssigkeit oder Mischung aus einer Flüssigkeit und einem feinteiligen Feststoff, dass die Flüssigkeit oder die Mischung das von einer fluiden Phase einnehmbare Innenvolumen des Behälters nur teilweise ausfüllt und das dabei verbleibende restliche einnehmbare Innenvolumen des Behälters von einer Gasphase ausgefüllt wird, umfassend ein Zuführen von der im wesentlichen gleichen Flüssigkeit oder der im wesentlichen gleichen Mischung in den Behälter als Treibstrahl einer im Behälter in der Flüssigkeit oder in der Mischung befindlichen, eine Treibdüse und einen Impulsaustauschraum, in den der Ausgang der Treibdüse zeigt, aufweisenden Strahldüse zur Verfügung gestellt, das dadurch gekennzeichnet ist, dass der Ansaugbereich zwischen Treibdüse und Impulsaustauschraum mit der Maßgabe mit einer wenigstens eine Ansaugöffnung aufwesenden Ummantelung versehen ist, dass die wenigstens eine Ansaugöffnung unterhalb (unterhalb meint hier, vom zentralen Strahl ausgehend in Richtung des Behälter- bzw. Tankbodens) des von der Treibdüse in den Impulsaustauschraum führenden zentralen Strahls liegt und beim Eintritt des aus der Treibdüse austretenden Treibstrahls in den Impulsaustauschraum über die wenigstens eine Ansaugöffnung von dem im Behälter gelagerten flüssigen Medium aus der Umgebung angesaugt wird.

Die EP-A 856491, die US-A 4,014,961 und die EP-A 419419 betreffen dagegen Verfahren, bei denen aus der Umgebung Gasphase angesaugt wird.

Erfindungsgemäß zweckmäßig ist das erfindungsgemäße Verfahren in einfacher Weise so durchführbar, dass es das Entnehmen einer Teilmenge der Flüssigkeit oder der Mischung aus dem Behälter und das Rückführen wenigstens eines Teils der entnommenen Teilmenge als Bestandteil des Treibstrahls der erfindungsgemäße zu verwendenden Strahldüse umfasst.

Erfindungsgemäß zweckmäßig ist das erfindungsgemäße Verfahren in einfacher Weise so durchführbar, dass es das Entnehmen einer Teilmenge der Flüssigkeit oder der Mischung aus dem Behälter und das Rückführen wenigstens eines Teils der entnommenen Teilmenge als Bestandteil des Treibstrahls der erfindungsgemäß zu verwendenden Strahldüse umfasst. Grundsätzlich kann der Treibstrahl der erfindungsgemäß zu verwendenden Strahldüse beim erfindungsgemäßen Verfahren auch ausschließlich wenigstens ein Teil (oder die Gesamtmenge) einer zuvor aus dem Behälter entnommenen Teilmenge der im Behälter befindlichen Flüssigkeit oder Mischung sein.

Bei Bedarf kann ein gegebenenfalls nicht als Treibstrahl rückgeführter Teil der entnommenen Teilmenge anderen Verwendungszwecken zugeführt werden. Selbstverständlich kann das erfindungsgemäße Verfahren aber auch ausgeführt werden, ohne dass die in den Behälter als Treibstrahl zugeführte Flüssigkeit oder Mischung zuvor aus dem Behälter entnommene Flüssigkeit oder Mischung umfasst. Dies ist z. B. dadurch möglich, dass man die zum Nachfüllen in den Behälter zu führende Flüssigkeit oder Mischung als Treibstrahl der Saugvorrichtung dem Behälter zuführt. Selbstverständlich kann sich der Treibstrahl der Saugvorrichtung beim erfindungsgemäßen Verfahren aber auch aus einem Gemisch aus zum Zweck der Nachfüllung in den Behälter zu führender Flüssigkeit oder Mischung und dem Behälter zuvor entnammener Flüssigkeit oder Mischung konstituieren.

Erfindungsgemäß günstig ist es, dass die den Treibstrahl liefernde Pumpe mit der zur Entnahme der im Behälter gelagerten Flüssigkeit/Mischung zu verwendenden Pumpe identisch sein kann.

Im Fall von (Meth)acrylmonomeren enthaltenden gelagerten Flüssigkeiten (oder sonstigen flüssig gelagerten Chemikalien) kommen als derartige Förderpumpen beispielsweise die in der WO 20041003389 empfohlenen Förderpumpen mit doppelter Gleitringdichtung in Betracht.

Als zu diesen alternative Förderpumpen kommen beispielsweise jene der US-A 5,727,792, der US-A 4,168,936, der EP-A 1 092 874 sowie der US-A 4,865,333 in Betracht.

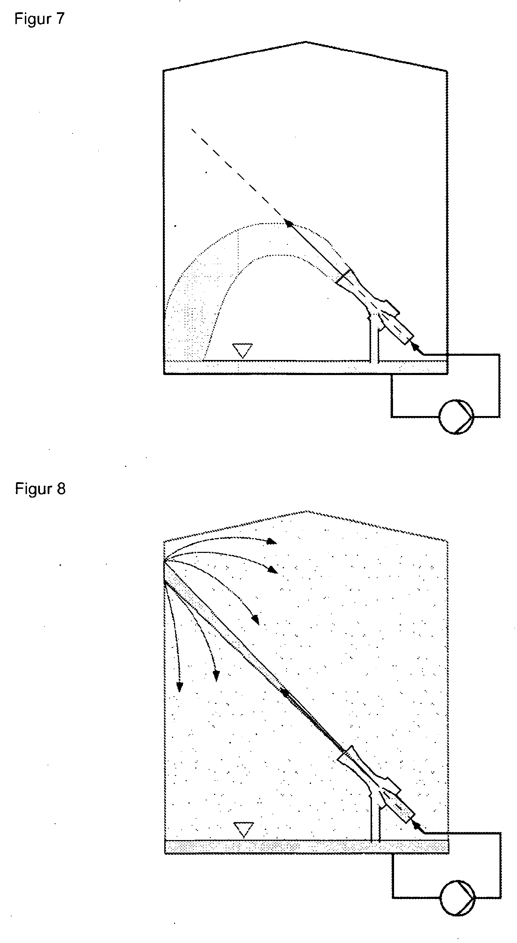

Erfindungsgemäß vorteilhaft ist die wenigstens eine Ansaugöffnung als wenigstens ein von der Ummantelung zum Behälterboden hin auslaufendes Tauchrohr ausgestaltet, wie es die Figur 7 zeigt, und befindet sich dadurch in der Nähe des Behälterbodens (dies bedingt eine besonders rasche Durchmischung aufgrund des Ansaugens von unten).

Generell wird das Tauchrohr so gestaltet, dass sein Durchströmen einen möglichst geringen Druckverlust bedingt. Grundsätzlich kann die wenigstens eine Ansaugöffnung auch als über die Länge des Tauchrohres in dessen Wand verteilt angebrachte Löcher und/oder Schlitze ausgeführt sein. Auch kann das Tauchrohr an seinem in Bodennähe befindlichen Ende wie ein Fleischerhaken nach oben gebogen sein, so dass die Ansaugöffnung nicht zum Behälterboden, sondern zum Behälterdach(deckel) weist. Die Biegung kann aber auch wie bei einem Golfschläger ausgeführt sein und mit der Ansaugöffnung parallel zum Behälterboden auslaufen. Weiterhin kann das Tauchrohr samt Ansaugöffnung in einen auf dem Behälterboden stehenden, nach oben offenen, Topf ragen. Günstig ist auch, dass die Ansaugöffnung des Tauchrohres und der Auslass aus dem Impulsaustauschraum(rohr) räumlich voneinander (z. B. in maximaler Entfernung voneinander) unabhängig platziert werden können (in ihrer räumlichen Position nicht mehr in notwendiger Weise miteinander korreliert sind).

Durch die erfindungsgemäße Strahldüsenvarianten wird auch bei vergleichsweise niederem Stand des flüssigen Behälterinhaltes von selbigem noch angesaugt.

Dies vermindert die Geschwindigkeit des aus der Treibdüse austretenden Treibstrahls weiterhin in erheblichem Umfang. Es treten vergleichbare Strömungszustände wie in Figur 4 ohne nennenswerte Spraybildung auf. Insbesondere die erfindungsgemäße Tauchrohrvariante gestattet selbst bei extrem abgesenktem Füllstand im Lagerbehälter noch eine im wesentlichen weitgehend unbeeinträchtigte Durchführung des erfindungsgemäßen Verfahrens. Problematisch wird diese allenfalls dann, wenn die Förderpumpe kurzzeitig abgeschaltet wird. In diesem Fall ist das Tauchrohr zur Treibdüse hin nicht mehr mit der gelagerten Flüssigkeit oder der gelagerten Mischung aus Flüssigkeit und feinteiligem Feststoff gefüllt, sondern mit Gas (vgl. Fig. 8).

Treibdüsen, deren Düsenmündung Flüssigkeitsstrahlen mit erhöhter Turbulenz erzeugen, sind für diesen Fall deshalb vorteilhaft, da mit erhöhter Turbulenz austretende Treibstrahlen eine erhöhte Saugkraft bedingen, um unmittelbar nach der Wiederinbetriebnahme den Flüssigkeits- bzw. Mischungsstand im Tauchrohr im erforderlichen Ausmaß anzuheben, und die erfindungsgemäße Verfahrensweise fortsetzen zu können (mit erhöhter Turbulenz austretende Treibstrahlen reißen das Gas aus dem Ansaugraum besonders effektiv mit, da die Kontaktfläche zwischen Gas- und Flüssigphase erhöht ist).

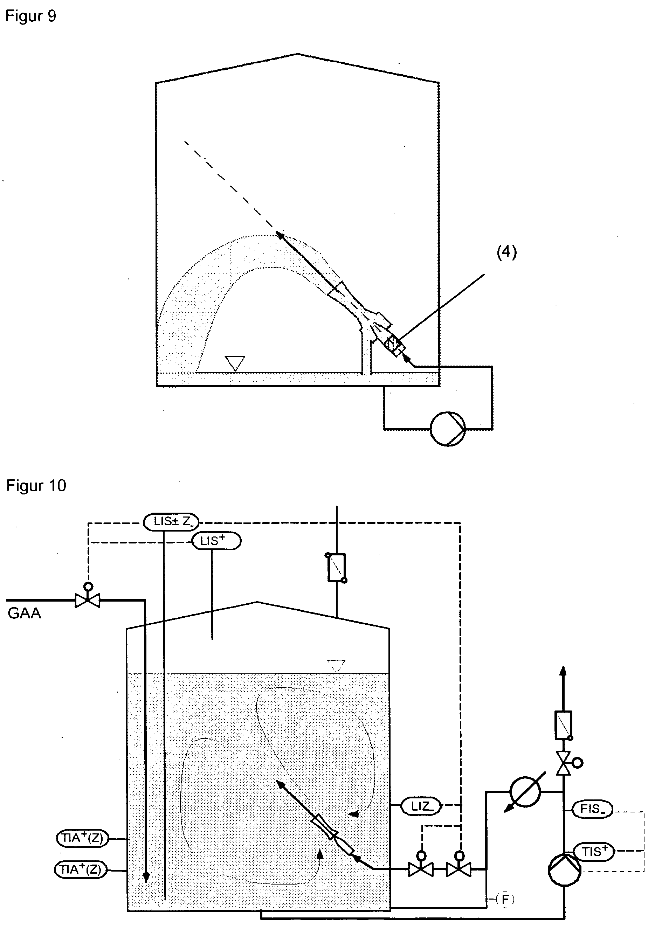

Im Fall einer Nichtanhebung schießt der Treibstrahl ansonsten bei einer Wiederinbetriebnahme, mit den bereits beschriebenen nachteiligen Auswirkungen, ungebremst an die Behälterwand. Eine zusätzliche, im vorgenannten Sinn erfindungsgemäß vorteilhafte, Verbesserung der Aufweitung des Treibstrahls hinter seinem Ausgang aus der Treibdüse wird erreicht, wenn ihm vor seinem Durchgang durch die Treibdüse eine leichte Drallbewegung aufgeprägt wird. Dies ist z. B. dadurch möglich, dass man kurz vor der Treibdüse einen geeigneten Drallkörper (4) einbaut (siehe Figur 9). Als solche kommen erfindungsgemäß vorteilhaft z. B. Schaufelkränze in Betracht, wie sie Bild 3 in vt >>verfahrenstechnik<<15 (1981) Nr. 10 auf Seite 739 zeigt. Bei Verwendung von Drallkörpern, die einen zu starken Drall auf den Flüssigkeitsstrahl übertragen (d. h., zu stark verdrallten turbulenten Treibstrahlen), kann jedoch auch eine Verschlechterung des Saugverhaltens eintreten. Prinzipiell kann die Verdrallung auch durch eine tangentiale Treibflüssigkeitszuführung in die Treibdüse erzeugt werden.

Alternativ und/oder zusätzlich zur Verdrallung des Treibstrahls kann dieser z. B. dadurch zerteilt (in mehrere Einzelstrahlen aufgeteilt) werden, dass der Austrittsquerschnitt des Treibstrahls eine Vielzahl von Austrittsöffnungen aufweist (der Querschnitt der Treibdüse mit einem Treibstrahlaufteiler versehen ist). In einfachster Weise ist dies dadurch realisierbar, dass in den Austrittsquerschnitt der Treibdüse ein Sieb(blech) eingebaut wird, das eine Vielzahl von Durchtrittsöffnungen (im einfachsten Fall ringförmige) aufweist, wie es z. B. Fig. 2 aus "Mixing shocks and their influence on the design of liquid-gas ejectors", J. H. Witte, Proefschrift, Technische Hogeschool, Delft (Dezember 1962) auf Seite 14 zeigt. Anstelle von Löchern (man spricht dann von Sieboder Viellochdüsen) kommen aber auch Spaltdüsen (z. B. konzentrische Ringspalte) in Betracht.

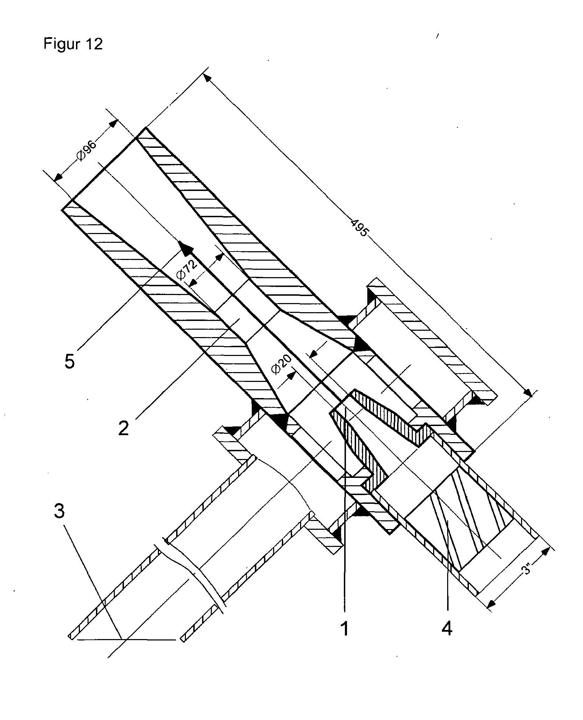

Der in Abwesenheit des gelagerten flüssigen Mediums durch den Schwerpunkt der engsten Querschnittsfläche der Treibdüse austretende (ausströmende) (und in den Impulsaustauschraum führende) Strahl soll in dieser Schrift als von der Treibdüse in den Impulsaustauschraum führender zentraler Strahl (siehe (5) in Fig. 12) bezeichnet werden.

Die Auslegung einer erfindungsgemäß zu verwendenden Strahldüse für ein konkretes Durchmischungsproblem kann anhand der im Stand der Technik zur herkömmlichen Strahldüse aufgezeigten Zusammenhänge sowie der dort gemachten Angaben erfolgen (vgl. auch z. B. DE-A 2404289, DE-A 1557018, Chemie-Ing.-Tech. 61 (1989) Nr. 11, Seiten 908 - 909, Chemie-Ing.-Techn. 47. Jahrg. 1975, Nr. 5, Seite 209, und Chemie-Ing.-Techn. MS 201/75). Als Fertigungsmaterial kommen angepasst an die Beschaffenheit der gelagerten Flüssigkeit/Mischung sowohl Edelstähle als auch Kunststoffe (z. B. faserverstärkte Kunststoffmatrizen, wie sie die EP-A 245844 empfiehlt) in Betracht. Handelt es sich beim Lagerinhalt um Acrylsäure, Methacrylsäure, deren Ester oder um Lösungen derselben, empfiehlt sich als Werkstoff für die Strahldüse insbesondere Edelstahl der DIN-Werkstoffnummern 1.4541 und 1.4547.

Prinzipiell können der Impulsaustauschraum und die Treibdüse über Stege (vorzugsweise über drei (ermöglichen eine voll befriedigende Zentrierung) Stege, von denen jeweils zwei einen Winkel von 120° einschließen) miteinander verbunden sein. Sie können aber auch ineinander verschraubt sein. In diesem Fall gestatten im einfachsten Fall in der Ummantelung zum Behälterboden hin angebrachte Schlitze bzw. wenigstens ein nahtlos in die Ummantelung führendes Tauchrohr das Ansaugen der Umgebungsflüssigkeit.

Grundsätzlich ist die erfindungsgemäße Verwendung einer erfindungsgemäßen Strahldüse für das erfindungsgemäße Verfahren ausreichend. Erfindungsgemäß zweckmäßig wird sie im Lagerbehälter leicht erhöht angebracht (der Auslass aus dem Impulsaustauschraum befindet sich vorteilhaft etwa auf einer Höhe von 10 bis 30 %, vorzugsweise 15 bis 25 % der maximalen Füllhöhe des Lagerbehälters; in schlanken Behältern sind erhöhte Positionierungen der Strahldüse bevorzugt). Üblicherweise befindet sich eine erfindungsgemäß eingesetzte Strahldüse nicht im Zentrum des Lagerbehälters, sondern in Wandnähe. Der Winkel zwischen einer Horizontalen zum Behälterboden und dem (gedachten) Zentralstrahl der aus der Treibdüse austretenden Flüssigkeit ist in einem weiten Bereich variierbar und kann z. B. Werte von -90° bis +90°, und beispielhaft 45° annehmen. In schlanken Tanks werden eher größere Winkel und in flachen Tanks eher kleinere Winkel bevorzugt. Selbstverständlich können in ein- und demselben Behälter aber auch mehrere erfindungsgemäße Strahldüsen gleichzeitig erfindungsgemäß betrieben werden. Anwendungstechnisch zweckmäßig wird man dabei Strahldüsen gleicher Größe verwenden. Die Strahldüsen können dabei prinzipiell in beliebiger Stellung zueinander im Tank angeordnet sein. Auch können die Winkel zwischen einer Vertikalen zum Behälterboden und dem (gedachten) Zentralstrahl der aus der Treibdüse austretenden Flüssigkeit unterschiedlichste Werte annehmen. Desweiteren kann auch der jeweilige Auslass aus dem jeweiligen Impulsaustauschraum der jeweiligen Strahldüse sich auf unterschiedlicher Höhe im Lagertank befinden. Anwendungstechnisch zweckmäßig werden dabei die vorgenannten Winkel zur Horizontalen sowie die jeweilige Auslasshöhe jedoch weitgehend identisch eingestellt. Erfindungsgemäß günstig werden dann (jeweils in Behälterwandnähe angebracht) z. B. zwei Strahldüsen einander gegenüberstehend, oder drei Strahldüsen auf den Ecken eines gleichseitigen Dreiecks befindlich, oder vier Strahldüsen auf den Ecken eines Quadrates befindlich angebracht.

Es ist erfindungsgemäß auch möglich, bei einer Strahldüse mehrere Treibdüsen mit einem gemeinsamen Impulsaustauschraum zu vereinigen (zu kombinieren), wobei dessen Querschnitt der Eintrittsöffnung der Summe des für die jeweilige Treibdüse bei deren Einzelanwendung benötigten Querschnitts entsprechen sollte.

Die bei der Ausübung des erfindungsgemäßen Verfahrens durch die wenigstens eine Strahldüse zusätzlich zu ihrem Treibstrahl aus der Umgebung der Strahldüse in die Ummantelung des Übergangs Treibdüse/Impulsaustauschrohr (und damit in diesen Übergang) pro Zeiteinheit angesaugte Flüssigkeitsmenge ist ein Vielfaches der in die Treibdüse pro Zeiteinheit gepumpten Treibflüssigkeit (in der Regel das 1- bzw. 2- bis 10fache (teilweise bis 100fache), häufig das 4- bis 8fache).

Der aus dem Impulsaustauschraum austretende Massenstrom weist beim erfindungsgemäßen Verfahren in der Regel eine Impulsdichte von 10³ bis 10⁵ N/m², vorzugsweise von 5•10³ bis 2•10⁴ N/m² auf. Im Unterschied dazu beträgt die mittlere Impulsdichte des Treibstrahls beim erfindungsgemäßen Verfahren typisch 2,5•10⁴ bis 10⁷ N/m², häufig 10⁵ bis 5•10⁶ N/m².

Im übrigen ist das Volumen des (am Eintritt und am Austritt offenen) Impulsaustauschraums im Vergleich zum Behältervolumen sehr klein beim erfindungsgemäßen Verfahren. In der Regel beträgt das Volumen des Impulsaustauschraumes den hundertsten bis hunderttausendsten bzw. bis millionsten Teil des maximalen flüssigen Füllinhalts des Behälters.

Grundsätzlich kann der Impulsaustauschraum der erfindungsgemäß zu verwendenden Strahldüse in verschiedenen Formen gestaltet werden, wobei diese Form zweckmäßig der Form der Treibdüse angepasst wird.

Der Impulsaustauschraum zeigt normalerweise einen in Strömungsrichtung konstanten Querschnitt, der sowohl kreisrund, als auch eckig (z. B. dreieckig, quadratisch oder rechteckig) oder oval etc. sein kann. Grundsätzlich kann der Impulsaustauschraum aber auch einen sich in Strömungsrichtung vergrößernden Querschnitt aufweisen. Im allgemeinen verwendet man als Impulsaustauschraum (Mischraum) zylindrische Rohre und/oder Kegelsegmente.

Der mittlere Durchmesser der Eintrittsöffnung des Impulsaustauschraums wird in der Regel das 2- bis 20fache, vorzugsweise das 4- bis 10fache, des mittleren Durchmessers der Treibdüse und die Länge der Impulsaustauschraums in typischer Weise das 3- bis 30fache, vorzugsweise das 3- bis 10fache, seines hydraulischen Durchmessers betragen.

Unter dem mittleren Durchmesser wird dabei der Durchmesser eines Kreises verstanden, der die gleiche Fläche wie der betreffende Querschnitt (dieser kann auch vieleckig oder oval sein) der Düse bzw. der Eintrittsöffnung des Impulsaustauschraums aufweist, die beide nicht in notwendiger Weise kreisrund sein müssen.

Sofern der Impulsaustauschraum als zylindrisches Rohr ausgestaltet ist, wird seine Länge in der Regel das 3- bis 30fache, bevorzugt das 3- bis 10fache seines Durchmessers betragen, der in diesem Fall gleichzeitig sein hydraulischer Durchmesser ist.

Sofern der Impulsaustauschraum keinen kreisförmigen oder über seine Länge keinen konstanten Querschnitt aufweist, wird seine Länge normalerweise das 3- bis 30fache, vorzugsweise das 3- bis 10fache seines hydraulischen Durchmessers betragen. Unter dem hydraulischen Durchmesser wird dabei der Durchmesser eines zylindrischen Rohres verstanden, das bei gleichen durchgesetzten Mengen und gleicher Länge den gleichen Druckverlust zeigt, wie der betreffende Impulsaustauschraum.

Die wenigstens eine Ansaugöffnung kann sich beim erfindungsgemäßen Verfahren in Richtung des Treibstrahls in der Ummantelung sowohl vor als auch hinter dem engsten Querschnitt in der Treibdüse befinden.

Die Geschwindigkeit der Treibflüssigkeit beim Austritt aus der Treibdüse wird in der Regel 5 bis 100 m/s, vorzugsweise 10 bis 70 bzw. bis 30 m/s, betragen.

Beim Eintritt des aus der Treibdüse ausströmenden Treibstrahls in den Impulsaustauschraum wird bei erfindungsgemäßen Verfahren über die wenigstens eine Ansaugöffnung von dem im Behälter gelagerten flüssigen Medium aus der Umgebung angesaugt. Dieser angesaugte "zweite" Flüssigkeitsstrom wird bei Eintritt in den Impulsaustauschraum beschleunigt. Gleichzeitig werden beide Flüssigkeitsströme nach ihrem Eintritt in den Impulsaustauschraum unter Impulsaustausch intensivst durchmischt. Durch Impulsaustausch im Impulsaustauschraum und durch Umwandlung der kinetischen Energie in Druckenergie in selbigem, erfolgt bei Durchgang durch den Impulsaustauschraum eine Minderung der Impulsdichte des Treibstrahls.

Der mittlere Durchmesser der wenigstens einen Ansaugöffnung in der Ummantelung des "Ansaugbereichs" zwischen Treibdüse und Impulsaustauschraum wird, normalerweise das 1- bis 10fache, vorzugsweise das 2- bis 5fache und besonders bevorzugt das 2- bis 3fache des mittleren Durchmessers des Querschnitts des Eintritts (des Eintrittsquerschnitts) in den Imputsaustauschraum betragen.

Ist die vorgenannte Ansaugöffnung als wenigstens ein von der Ummantelung zum Behälterboden hin auslaufendes Tauchrohr ausgestaltet, wie es die Figur 7 zeigt, kann der direkte Abstand, gemessen von der Ansaugöffnung des Tauchrohres bis zum Einlaufen des Tauchrohres in die Ummantelung, in einem weiten Bereich variabel gestaltet werden.

Selbstverständlich kann der Querschnitt des Tauchrohres prinzipiell beliebig, d. h., kreisrund, oval oder vieleckig sein. Normalerweise ist der Querschnitt des Tauchrohres bei erfindungsgemäßen Verfahren über seine Länge konstant. Tauchrohre mit kreisrundem Querschnitt sind erfindungsgemäß bevorzugt.

Das Tauchrohr kann mit der Ummantelung nahtlos verschweißt, oder in die Ummantelung eingeschraubt, oder mit einem in der Ummantelung befindlichen entsprechenden Anschluss (z. B. angeflanscht an einen Anschlussstutzen) verbunden sein.

Erfindungsgemäß vorteilhaft für das erfindungsgemäße Verfahren ist, dass es in seiner Anwendung weitgehend unabhängig vom Volumenanteil der Gasphase im Behälter am Gesamtinnenvolumen des Behälters ist. Beispielswiese kann beim erfindungsgemäßen Verfahren das Volumen der Gasphase im Behälter wenigstens 5 Vol.-%, oder wenigstens 10 Vol.-%, oder wenigstens 20 Vol.-%, oder wenigstens 25 Vol.-%, oder wenigstens 30 Vol.-%, oder wenigstens 35 Vol.-%, oder wenigstens 40 Vol.-% des Behältervolumens betragen.

Ferner ist es erfindungsgemäß günstig, wenn bei Ausübung des erfindungsgemäßen Verfahrens je Minute pro Liter an flüssigem Inhalt des Lagerbehälters wenigstens etwa 10⁻⁵ bzw. wenigstens 10⁻² Liter Flüssigkeit (bestehend aus durch die Treibdüse geführter Treibstrahlflüssigkeit und durch die wenigstens eine Ansaugöffnung angesaugtem "zweitem Flüssigkeitsstrom) (in der Regel aber nicht mehr als 1 bzw. nicht mehr als 0,1 Liter) durch den Impulsaustauschraum strömen.

Der Behälter selbst weist mit Vorteil zylindrische (z. B. mit kreisförmigem, oder quadratischem, oder rechteckigem Querschnitt) Struktur auf, die nach oben durch ein konisches Dach oder durch ein halbkugelförmiges bzw. domförmiges Dach geschlossen ist.

Das erfindungsgemäße Verfahren eignet sich insbesondere zur vorteilhaften Lagerung aller eingangs dieser Schrift genannten Flüssigkeiten bzw. Mischungen aus einer Flüssigkeit und einem feinteiligen Feststoff. Diese sind dabei in der Regel mit einem Gas überfrachtet, das mit dem Dampf der Flüssigkeit gesättigt ist (d. h., die Gasphase besteht üblicherweise nicht nur aus verdampfter Flüssigkeit).

Als solche Gase kommen z. B. Inertgase wie N₂, Edelgase wie z. B. Ar und/oder CO₂ in Betracht.

Selbstverständlich können solche Gase aber auch Luft, oder sonstige Gemische aus molekularem Sauerstoff und Inertgas sein. Der Absolutdruck im Tank kann z. B. von Atmosphärendruck bis 50 bar betragen, die Temperatur im Tank kann z. B. bei 0 (oder weniger) bis 100 (oder mehr) °C liegen.

Beide vorgenannten Größen unterliegen beim erfindungsgemäßen Verfahren jedoch keiner Beschränkung.

Von besonderem Vorteil ist das erfindungsgemäße Verfahren dann, wenn es sich bei der gelagerten Flüssigkeit um wenigstens eine einfach ethylenisch ungesättigte organische Verbindung (z. B. N-Vinylformamid, Vinylacetat, Ester der Maleinsäure, Styrol, und/oder N-substituierte Acrylamide) oder um eine wenigstens eine solche einfach ethylenisch ungesättigte organische Verbindung enthaltende Lösung handelt, insbesondere dann, wenn diese einen Polymerisationsinhibitor zum Zweck der Inhibierung unerwünschter radikalischer Polymerisationen zugesetzt enthalten.

Als weitere Beispiele solcher wenigstens einfach ethylenisch ungesättigten organischen Verbindungen seien genannt Acrolein, Methacrolein, Acrylsäure, Methacrylsäure sowie Ester aus Acrylsäure und/oder Methacrylsäure und ein- oder mehrwertigen Alkanolen. Zu diesen Estern zählen insbesondere jene, deren Alkohol ein bis zwanzig C-Atome, oder ein bis zwölf C-Atome, oder ein bis acht C-Atome aufweisen. Als beispielhafte Vertreter solcher Ester seien genannt Methylacrylat, Ethylacrylat, n-Butylacrylat, iso-Butylacrylat, tert.-Butylacrylat, 2-Ethylhexyl-acrylat, Hydroxyethylacrylat, Hydroxypropylacrylat, Hydroxyethylmethacrylat, Hydroxypropylmethacrylat, Methylmethacrylat, Ethylmethacrylat, n-Butylmethacrylat und tert.-Butylmethacrylat. Als Inhibitoren radikalischer Polymerisationen kommen für vorgenannte Monomeren und ihre Lösungen in organischen oder wässrigen Lösungsmitteln z. B. der Monomethylether des Hydrochinon (MEHQ), Hydrochinone, Phenole (z. B. 2,4-Dimethyl-6-6-butylphenol), Chinone, Butylbrenzkatechin, Phenothiazin, Diphenylamin, p-Phenylendiamine, Nitroxyl-Radikale und/oder Nitrosoverbindungen wie z. B. Nitrophenole in Betracht (sowie alle anderen in der WO 00/64947 genannten Polymerisationsinhibitoren). Bezogen auf den Monomerengehalt kann die zum Zweck der Lagerung zugesetzte Menge an Polymerisationsinhibitoren 0,5 bis 1000 (häufig 1 bis 600 Gew.-ppm oder 2 bis 500 Gew.-ppm) Gew.-ppm betragen.

Im Fall von glacial Acrylsäure = Reinacrylsäure (Acrylsäuregehalt ≥ 99,5 Gew.-%) sind in der Regel 200 ± 20 Gew.-ppm MEHQ als Lagerinhibitor zugesetzt (Lagertemperaturempfehlung: 15 bis 25 °C). Im Fall von n-Butylacrylat (n-Butylacrylatgehalt ≥ 99,5 Gew.-%) und den anderen genannten (Meth)acrylestern werden in der Regel 15 ± 5 Gew.-ppm MEHQ als Lagerstabilisator zugesetzt (Lagertemperaturempfehlung: 20 bis 35 °C). MEHQ ist auch der bevorzugte Lagerstabilisator für die anderen genannten (Meth)acrylmonomeren und deren Lösungen.

Wie bereits erwähnt, entfalten vorgenannte Polymerisationsinhibitoren (insbesondere MEHQ) ihre volle Inhibierwirkung in der Regel lediglich im Beisein von molekularem Sauerstoff.

Insbesondere (Meth)acrylmonomere vermögen mit molekularem Sauerstoff jedoch explosive Gemische zu bilden.

Um eine entsprechende Explosion auch im Fall einer Versprühung (Sprayausbildung) im Lagertank auszuschließen, musste bisher entweder über eine sicherheitstechnisch hoch verfügbare Flüssigkeitsstandkontrolle eine solche Spraybildung verhindert, oder der Sauerstoffgehalt der Gasphase im Lagertank entsprechend begrenzt werden, wie es die WO 2005/049543 im Kontext mit der US-A 6,910,511 empfiehlt.

Die Anwendung der erfindungsgemäßen Verfahrensweise, mit Hilfe derer sich auch bei vergleichsweise niederem Flüssigkeitsstand im Behälter eine Sprayausbildung vermeiden lässt, gestattet demgegenüber die vergleichsweise einfache sichere Überschichtung des Tankinhalts mit an der im Tank gelagerten Flüssigkeit gesättigter Luft. Handelt es sich jedoch bei der gelagerten Acrylsäure um Acrylsäure, die durch heterogen katalysierte partielle Gasphasenoxidation von Propylen im Beisein von Propan oder durch heterogen katalysierte partielle Gasphasenoxidation des Propans selbst erzeugt wurde, fällt die zu lagernde rohe Acrylsäure nach ihrer Abtrennung aus dem Produktgasgemisch in der Regel in an Propan gesättigter Form an. In diesem Fall enthält die Gasatmosphäre zusätzlich brennbares Propan. Für eine sichere Lagerung ist es in diesem Fall angeraten, das Unterschreiten der Sauerstoffgrenzkonzentration durch Lagerung unter Magerluft gemäß der WO 2005/049543 in der Gasphase einzuhalten.

Grundsätzlich kann mit abnehmendem Füllstand im Lagerbehälter beim erfindungsgemäßen Verfahren die Rückführrate zur Ausbildung des Treibstrahls vermindert werden.

Damit umfasst die vorliegende Patentanmeldung insbesondere die nachfolgenden erfindungsgemäßen Ausführungsformen:
1. Ein Verfahren zum Durchmischen einer in einem im wesentlichen abgeschlossenen Behälter mit der Maßgabe befindlichen Flüssigkeit oder Mischung aus einer Flüssigkeit und einem feinteiligen Feststoff, dass die Flüssigkeit oder die Mischung das von einer fluiden Phase einnehmbare Innenvolumen des Behälters nur teilweise ausfüllt und das dabei verbleibende restliche einnehmbare Innenvolumen des Behälters von einer Gasphase ausgefüllt wird, umfassend ein Zuführen von der im wesentlichen gleichen Flüssigkeit oder der im wesentlichen gleichen Mischung in den Behälter als Treibstrahl einer im Behälter in der Flüssigkeit oder in der Mischung befindlichen, eine Treibdüse und einen Impulsaustauschraum, in den der Ausgang der Treibdüse zeigt, aufweisenden Strahldüse, dadurch gekennzeichnet, dass der Ansaugbereicht zwischen Treibdüse und Impulsaustauschraum mit der Maßgabe mit einer wenigstens eine Ansaugöffnung aufweisenden Ummantelung versehen ist, dass die wenigstens eine Ansaugöffnung unterhalb des von der Treibdüse in den Impulsaustauschraum führenden zentralen Strahls liegt.
2. Ein Verfahren gemäß Ausführungsform 1, dadurch gekennzeichnet, dass die wenigstens eine Ansaugöffnung als wenigstens ein von der Ummantelung zum Behälterboden hin auslaufendes Tauchrohr ausgestaltet ist.
3. Ein Verfahren gemäß einer der Ausführungsformen 1 oder 2, dadurch gekennzeichnet, dass dem Treibstrahl vor seinem Durchgang durch die Treibdüse eine Drallbewegung aufgeprägt wird.
4. Ein Verfahren gemäß einer der Ausführungsformen 1 bis 3, dadurch gekennzeichnet, dass die Drallbewegung mit einem vor die Treibdüse eingebauten Drallkörper aufgeprägt wird.
5. Ein Verfahren gemäß einer der Ausführungsformen 1 bis 3, dadurch gekennzeichnet, dass die Drallbewegung dadurch aufgeprägt wird, dass man die Treibflüssigkeit der Treibdüse tangential zuführt.
6. Ein Verfahren gemäß einer der Ausführungsformen 1 bis 5, dadurch gekennzeichnet, dass der Treibstrahl beim Durchgang durch die Treibdüse zerteilt wird.
7. Ein Verfahren gemäß Ausführungsform 6, dadurch gekennzeichnet, dass die Treibdüse eine Siebdüse oder eine Spaltdüse ist.
8. Ein Verfahren gemäß einer der Ausführungsformen 1 bis 7, dadurch gekennzeichnet, dass die Flüssigkeit wenigstens eine der organischen Verbindungen aus der Gruppe umfassend Acrolein, Methacrolein, Acrylsäure, Methacrylsäure, Ester der Acrylsäure und Ester der Methacrylsäure enthält.
9. Ein Verfahren gemäß einer der Ausführungsformen 1 bis 7, dadurch gekennzeichnet, dass die Flüssigkeit N-Vinylformamid enthält.
10. Ein Verfahren gemäß einer der Ausführungsformen 8 oder 9, dadurch gekennzeichnet, dass die Flüssigkeit wenigstens einen Polymerisationsinhibitor gelöst enthält.
11. Ein Verfahren gemäß einer der Ausführungsformen 1 bis 10, dadurch gekennzeichnet, dass die Gasphase molekularen Sauerstoff enthält.
12. Verfahren gemäß einer der Ausführungsformen 1 bis 11, dadurch gekennzeichnet, dass die in den Behälter als Treibstrahl zugeführte Flüssigkeit oder Maischung einen Teil oder die Gesamtmenge einer zuvor aus dem Behälter entnommene Teilmenge der im Behälter befindlichen Flüssigkeit oder Mischung umfasst.
13. Verfahren gemäß einer der Ausführungsformen 1 bis 11, dadurch gekennzeichnet, dass die in den Behälter als Treibstrahl zugeführte Flüssigkeit oder Mischung keine zuvor aus dem Behälter entnommene Teilmenge der im Behälter befindlichen Flüssigkeit oder Mischung umfasst.
14. Verfahrengemäß einer der Ausführungsformen 1 bis 13, dadurch gekennzeichnet, dass die in den Behälter als Treibstrahl geführte Flüssigkeit oder Mischung zuvor durch einen Wärmeaustauscher geführt worden ist.
15. Ein Verfahren gemäß einer der Ausführungsformen 1 bis 14, dadurch gekennzeichnet, dass je Minute pro Liter an im Behälter befindlicher Flüssigkeit wenigstens 10⁻⁵ Liter der im wesentlichen gleichen Flüssigkeit, bestehend aus durch die Treibdüse geführter Treibstrahlflüssigkeit und durch die wenigstens eine Ansaugöffnung angesaugtem Flüssigkeitsstrom, durch den Impulsaustausch strömen.
16. Verfahren gemäß einer der Ausführungsform 1 bis 14, dadurch gekennzeichnet, dass je Minute pro Liter an im Behälter befindlicher Mischung aus einer Flüssigkeit und einem feinteiligem Feststoff wenigstens 10⁻⁵ Liter der im wesentlichen gleichen Mischung, bestehend aus durch die Treibdüse geführter Treibstrahlmischung und durch die wenigstens eine Ansaugöffnung angesaugtem Mischungsstrom durch den Impulsaustauschstrom strömen.

Das erfindungsgemäße Verfahren ist aber auch geeignet, um in eine in einem im wesentlichen abgeschlossenen Behälter mit der Maßgabe befindliche Flüssigkeit oder Mischung aus einer Flüssigkeit und einem feinteiligen Feststoff, dass die Flüssigkeit oder die Mischung das von einer fluiden Phase einnehmbare Innenvolumen des Behälters nur teilweise ausfüllt und das dabei verbleibende restliche einnehmbare Innenvolumen des Behälters von einer Gasphase ausgefüllt wird, eine andere Flüssigkeit oder eine andere Mischung möglichst rasch einzumischen (und dies auch unabhängig vom gegebenen Füllstand im Behälter).

In diesem Fall kann man in einfachster Weise so vorgehen, dass die erfindungsgemäß als Treibstrahl zuzuführende Flüssigkeit oder Mischung ausschließlich die einzumischende andere Flüssigkeit oder andere Mischung ist. Um nach erfolgter Zufuhr der anderen Flüssigkeit oder der anderen Mischung die Ausbildung eines homogenen Gemischs im Behälter weiter zu fördern, wird man demselben anwendungstechnisch zweckmäßig, z. B. mit der zur Behälterentnahme verfügbaren Pumpe, eine Teilmenge der dann im Behälter befindlichen Gesamtmenge an Flüssigkeit oder Mischung entnehmen und wenigstens einen Teil der entnommenen Teilmenge (gegebenenfalls nachdem dieser über einen Wärmeaustauscher geführt wurde) als Treibstrahl einer im Behälter in der Flüssigkeit oder in der Mischung befindlichen erfindungsgemäß zu verwendenden erfindungsgemäßen Strahldüse in den Behälter zurückführen.

Alternativ kann auch so vorgegangen werden, dass man zunächst ein Gemisch aus der anderen Flüssigkeit oder der anderen Mischung und einer dem Behälter zuvor entnommenen Teilmenge der darin enthaltenen Flüssigkeit oder Mischung als Treibstrahl der erfindungsgemäß zu verwendenden erfindungsgemäßen Strahldüse anwendet. Um nach so erfolgter Zufuhr der zuzuführenden Gesamtmenge der anderen Flüssigkeit oder der anderen Mischung die Ausbildung eines homogenen Gemischs im Behälter weiter zu fördern, wird man demselben anwendungstechnisch zweckmäßig, z. B. mit der zur Behälterentnahme verfügbaren Pumpe, eine Teilmenge der dann im Behälter befindlichen Gesamtmenge an Flüssigkeit oder Mischung entnehmen und wenigstens einen Teil der entnommenen Teilmenge (gegebenenfalls nachdem dieser über einen Wärmeaustauscher geführt wurde) als Treibstrahl einer im Behälter in der Flüssigkeit oder in der Mischung befindlichen erfindungsgemäß zu verwendenden erfindungsgemäßen Strahldüse in den Behälter zurückführen.

Gegebenenfalls kann nach erfolgter Zufuhr der zugeführten Gesamtmenge der anderen Flüssigkeit oder der anderen Mischung die Ausbildung eines homogenen Gemischs im Behälter auch dadurch weitergefördert werden, dass man als Treibstrahl von der im wesentlichen gleichen Flüssigkeit oder Mischung zuführt, ohne diese zuvor aus dem Behälter entnommen zu haben.

Handelt es sich bei der im Behälter befindlichen Flüssigkeit, oder bei der Flüssigkeit der im Behälter befindlichen Mischung um eine solche, die wenigstens eine, wenigstens eine ethylenisch ungesättigte Gruppierung aufweisende Verbindung (z. B. Acrolein, Methacrolein, Acrylsäure, Methacrylsäure, Ester der Acrylsäure und/oder Ester der Methacrylsäure) enthält (in der Regel in durch zugesetzte Polymerisationsinhibitoren stabilisierter Form), kann es aus unterschiedlichsten Gründen zu unerwünschter radikalischer Polymerisation kommen. Um eine solche unerwünschte radikalische Polymerisation vor deren weitergehender Ausprägung möglichst rasch zu stoppen, wird im Stand der Technik die möglichst umgehende Einmischung von möglichst konzentrierten Lösungen radikalischer Polymerisationsinhibitoren empfohlen (vgl. WO 00/64947, WO 99/21893, WO 99124161, WO 99159717).

Derartige Lösungen können beispielsweise eine wie vorstehend beschrieben erfindungsgemäß einzumischende Flüssigkeit sein. Im besonderen kann es sich bei solchen "short stop Lösungen" um Inhibitorlösungen handeln, die mindestens 10 Ges.-% Phenothiazin, 5 bis 10 Gew.-% p-Methoxyphenol und mindestens 50 Gew.-% N-Methylpyrrolidon enthalten. Alternativ kommen alle anderen in den vorgenannten WO-Schriften empfohlenen "short stop Lösungen" in Betracht.

Damit umfasst die vorliegende Patentanmeldung zusätzlich die nachfolgende erfindungsgemäße Ausführungsform:
17. Ein Verfahren, um in eine in einem im wesentlichen abgeschlossenen Behälter mit der Maßgabe befindliche Flüssigkeit oder Mischung aus einer Flüssigkeit und einem feinteiligen Feststoff, dass die Flüssigkeit oder die Mischung das von einer fluiden Phase einnehmbare Innenvolumen des Behälters nur teilweise ausfüllt und das dabei verbleibende restliche einnehmbare Innenvolumen des Behälters von einer Gasphase ausgefüllt wird, eine andere Flüssigkeit oder eine andere Mischung einzumischen, umfassend ein Zuführen von der anderen Flüssigkeit oder der anderen Mischung in den Behälter als Treibstrahl einer im Behälter in der Flüssigkeit oder in der Mischung befindlichen, eine Treibdüse und einen Impulsaustauschraum, in den der Ausgang der Treibdüse zeigt, aufweisenden Strahldüse, dadurch gekennzeichnet, dass der Ansaugbereich zwischen Treibdüse und Impulsaustauschraum mit der Maßgabe mit einer wenigstens eine Ansaugöffnung aufweisenden Ummantelung versehen ist, dass die wenigstens eine Ansaugöffnung unterhalb des von der Treibdüse in den Impulsaustauschraum führenden zentralen Strahls liegt und beim Eintritt des aus der Treibdüse austretenden Treibstrahls in den Impulsaustauschraum über die wenigstens eine Ansaugöffnung von dem im Behälter gelagerten flüssigen Medium aus der Umgebung angesaugt wird.
18. Ein Verfahren gemäß Ausführungsform 17, dadurch gekennzeichnet, dass die im Behälter befindliche Flüssigkeit eine wenigstens eine ethylenisch ungesättigte Gruppierung aufweisende Verbindung enthält und die als Treibstrahl zugeführte andere Flüssigkeit eine Inhibitorlösung ist, die mindestens 10 Gew.-% Phenotiazin, 5 bis 10 Gew.-% p-Methoxyphenol und mindestens 50 Gew.-% N-Methylpyrrolidon enthält.

### Ausführungsbeispiel und Vergleichsbeispiel

In einem im Freien befindlichen Tank (Wanddicke: 5 mm, Fertigungsmaterial: Edelstahl der DIN Nr. 1.4541) gemäß Figur 10 (kreiszylindrische Grundfläche mit einem Durchmesser von 8,5 m und einer Höhe von 10 m bis zum Beginn des konischen Dachs) wurde mit 200 Gew.-ppm MEHQ stabilisierte Reinacrylsäure (GAA) bei einer angestrebten Innentemperatur von 20 °C unter Atmosphärendruck bei maximaler Füllhöhe gelagert. Die maximale Füllhöhe im Lagertank betrug 9 m. Das bei maximaler Füllhöhe verbleibende Gasvolumen betrug 69 m³.

Die Entnahme aus dem Tank erfolgte mittels einer Kreiselpumpe vom Typ CPK 50-200 der Fa. KSB Aktiengesellschaft in D-67227 Frankenthal.

Als Sperrflüssigkeit enthielt die Pumpe mit doppelter Gleitringdichtung ein Gemisch aus Ethylenglycol und Wasser. Die Überdeckung der Reinacrylsäure im Lagertank erfolgte mittels Luft. Über ein Abgassystem, welches über eine Fackel zur Atmosphäre hin geöffnet war (Öffnungsquerschnitt im konischen Dach = 20 cm²) konnte beim Befüllen zur Druckentlastung Gas aus der Gasphase des Tanks an eine Fackel abgegeben werden. In entsprechender Weise wurde bei der Entnahme von Reinacrylsäure aus dem Tank über eine Druckhaltevorrichtung zum Druckausgleich Luft nachdosiert.

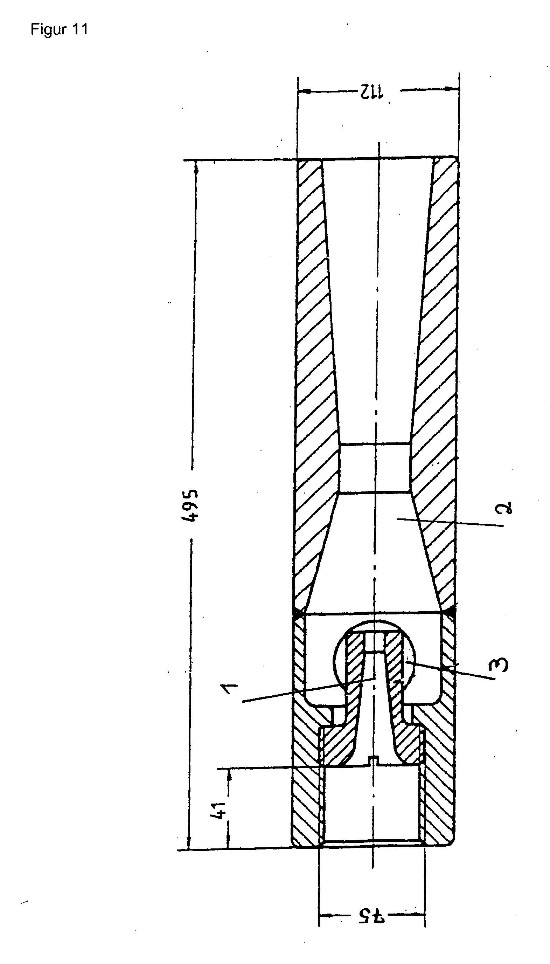

Zum Durchmischen des flüssigen Tankinhalts war wie in Figur 10 ersichtlich gegenüber dem Tankboden leicht erhöht eine konventionelle Strahldüse der GEA Wiegand GmbH in D-76275 Ettlingen vom Typ 17.1 angebracht, deren im wesentlichen maßstabgetreue Detailgestaltung die Figur 11 zeigt (die Angaben in Figur 11 sind die zugehörigen Dimensionen der Strahldüse in mm; die Wanddicken betrugen 4 bis 20 mm; Fertigungsmaterial für die Strahldüse war rostfreier Stahl (z. B. DIN-1.4541 Edelstahl).

Mit der Kreiselpumpe wurden dem Tank über einen Zeitraum von 1 Woche kontinuierlich 40 m³/h an Reinacrylsäure entnommen und über den Wärmeaustauscher in Figur 11 als Treibstrahl in die Strahldüse zurückgeführt. Anschließend wurde die Rückführrate beibehalten, die Entnahmemenge jedoch um 20 m³ je Stunde erhöht. Als der Füllstand den Ansaugbereich der Strahldüse erreichte, schlossen die im Weg der Treibflüssigkeit zur Strahldüse befindlichen Ventile V, um ein Versprühen des Treibstrahls im Tank zu vermeiden.

Eine weitergehende Entnahme von Reinacrylsäure aus dem Lagertank war ohne vorhergehende Befüllung desselben unter Beibehalt der Durchmischung nicht möglich.

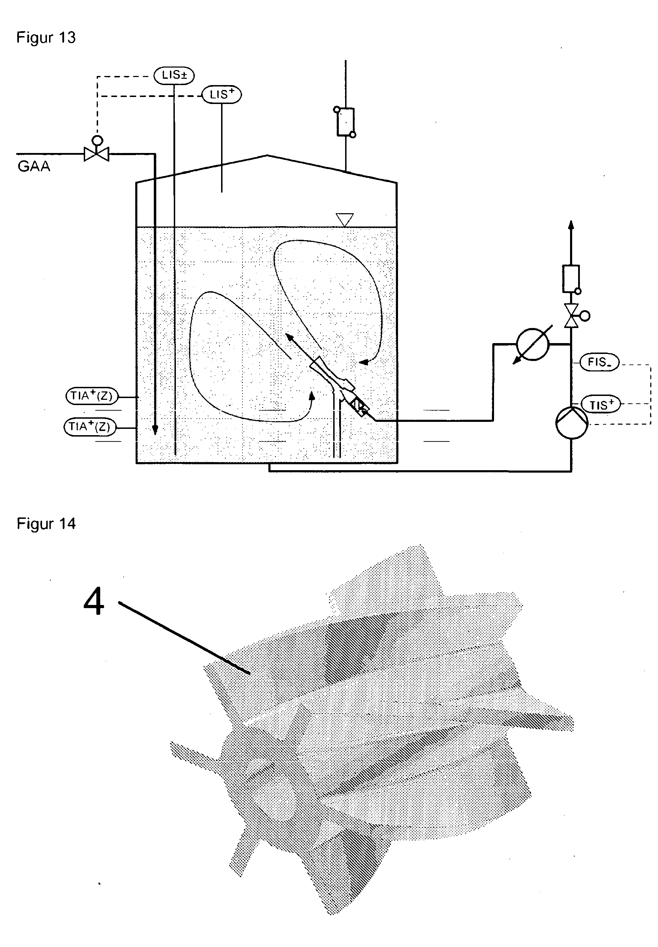

Nun wurde die konventionelle Strahldüse durch eine erfindungsgemäße, aus dem selben Material gefertigte Strahldüse, in welcher vor der Treibdüse der in Figur 12 ebenfalls gezeigte Drallkörper eingebaut war, ersetzt, deren Detailgestaltung die Figur 12 zeigt. Diese wurde wie in Figur 13 gezeigt im Lagertank angebracht. Bei geöffneten Ventilen V konnte die Entnahme von Reinacrylsäure ohne vorherige Befüllung des Lagertanks fortgesetzt werden. Spraybildung erfolgte nicht. Selbst bei Erreichen eines Füllstandes im Tank wie ihn Figur 8 qualitativ zeigt, konnte nach temporärem Abschalten der Pumpe der Entnahmevorgang so wie es Figur 9 zeigt ohne Spraybildung wieder aufgenommen und fortgesetzt werden.

Figur 14 zeigt zusätzlich die dreidimensionale Darstellung des verwendeten Drallkörpers.

Im übrigen stehen in den Figuren 10 und 13 die Abkürzungen:
TIA⁺ für "temperature indicator alarm";
LIS für "level indicator switch"; als Überfüllschutz (+) und als Unterfüllschutz (-);
TIS⁺ für "temperature indicator security";
FIS für "flow indicator security";
F für "flow" (kleiner Sicherheitsfluss als Pumpenschutz)
Z für "SIL3 interlock".

Weiterhin zeigen die Figuren 10 und 13 am Behälterdach eine beidseitig wirkende Rückschlagklappe sowie hinter der Pumpe aber vor der Entnahme eine einseitig wirkende (nur nach außen öffnende) Rückschlagklappe.

## Patentansprüche

1. Verfahren zum Durchmischen einer in einem im wesentlichen abgeschlossenen Behälter mit der Maßgabe befindlichen Flüssigkeit oder Mischung aus einer Flüssigkeit und einem feinteiligen Feststoff, dass die Flüssigkeit oder die Mischung das von einer fluiden Phase einnehmbare Innenvolumen des Behälters nur teilweise ausfüllt und das dabei verbleibende restliche einnehmbare Innenvolumen des Behälters von einer Gasphase ausgefüllt wird, umfassend ein Zuführen von der im wesentlichen gleichen Flüssigkeit oder der im wesentlichen gleichen Mischung in den Behälter als Treibstrahl einer im Behälter in der Flüssigkeit oder in der Mischung befindlichen, eine Treibdüse und einen Impulsaustauschraum, in den der Ausgang der Treibdüse zeigt, aufweisenden Strahldüse, **dadurch gekennzeichnet, dass** der Ansaugbereich zwischen Treibdüse und Impulsaustauschraum mit der Maßgabe mit einer wenigstens eine Ansaugöffnung aufweisenden Ummantelung versehen ist, dass die wenigstens eine Ansaugöffnung unterhalb des von der Treibdüse in den Impulsaustauchraum führenden zentralen Strahls liegt und beim Eintritt des aus der Treibdüse austretenden Treibstrahls in den Impulsaustauschraum über die wenigstens eine Ansaugöffnung von dem im Behälter gelagerten flüssigen Medium aus der Umgebung angesaugt wird.

2. Verfahren nach Anspruch 1, **dadurch gekennzeichnet, dass** die wenigstens eine Ansaugöffnung als wenigstens ein von der Ummantelung zum Behälterboden hin auslaufendes Tauchrohr ausgestaltet ist.

3. Verfahren nach einem der Ansprüche 1 oder 2, **dadurch gekennzeichnet, dass** dem Treibstrahl vor seinem Durchgang durch die Treibdüse eine Drallbewegung aufgeprägt wird.

4. Verfahren nach einem der Ansprüche 1 bis 3, **dadurch gekennzeichnet, dass** die Drallbewegung mit einem vor die Treibdüse eingebauten Drallkörper aufgeprägt wird.

5. Verfahren nach einem der Ansprüche 1 bis 3, **dadurch gekennzeichnet, dass** die Drallbewegung dadurch aufgeprägt wird, dass man die Treibflüssigkeit der Treibdüse tangential zuführt.

6. Verfahren nach einem der Ansprüche 1 bis 5, **dadurch gekennzeichnet, dass** der Treibstrahl beim Durchgang durch die Treibdüse zerteilt wird.

7. Verfahren nach Anspruch 6, **dadurch gekennzeichnet, dass** die Treibdüse eine Siebdüse oder eine Spaltdüse ist.

8. Verfahren nach einem der Ansprüche 1 bis 7, **dadurch gekennzeichnet, dass** die Flüssigkeit wenigstens eine der organischen Verbindungen aus der Gruppe umfassend Acrolein, Methacrolein, Acrylsäure, Methacrylsäure, Ester der Acrylsäure und Ester der Methacrylsäure enthält.

9. Verfahren nach einem der Ansprüche 1 bis 7, **dadurch gekennzeichnet, dass** die Flüssigkeit N-Vinylformamid enthält.

10. Verfahren nach Anspruch 8 oder 9, **dadurch gekennzeichnet, dass** die Flüssigkeit wenigstens einen Polymerisationsinhibitor gelöst enthält.

11. Verfahren nach einem der Ansprüche 1 bis 10, **dadurch gekennzeichnet, dass** die Gasphase molekularen Sauerstoff enthält.

12. Verfahren nach einem der Ansprüche 1 bis 11, **dadurch gekennzeichnet, dass** die in den Behälter als Treibstrahl zugeführte Flüssigkeit oder Mischung einen Teil oder die Gesamtmenge einer zuvor aus dem Behälter entnommenen Teilmenge der im Behälter befindlichen Flüssigkeit oder Mischung umfasst.

13. Verfahren nach einem der Ansprüche 1 bis 11, **dadurch gekennzeichnet, dass** die in den Behälter als Treibstrahl zugeführte Flüssigkeit oder Mischung keine zuvor aus dem Behälter entnommene Teilmenge der im Behälter befindlichen Flüssigkeit oder Mischung umfasst.

14. Verfahren nach einem der Ansprüche 1 bis 13, **dadurch gekennzeichnet, dass** die in den Behälter als Treibstrahl zugeführte Flüssigkeit oder Mischung zuvor durch einen Wärmeaustauscher geführt worden ist.

15. Verfahren nach einem der Ansprüche 1 bis 14, **dadurch gekennzeichnet, dass** je Minute pro Liter an im Behälter befindlicher Flüssigkeit wenigstens 10⁻⁵ Liter der im wesentlichen gleichen Flüssigkeit, bestehend aus durch die Treibdüse geführter Treibstrahlflüssigkeit und durch die wenigstens eine Ansaugöffnung angesaugtem Flüssigkeitsstrom, durch den Impulsaustauschraum strömen.

16. Verfahren nach einem der Ansprüche 1 bis 14, **dadurch gekennzeichnet, dass** je Minute pro Liter an im Behälter befindlicher Mischung aus einer Flüssigkeit und einem feinteiligen Feststoff wenigstens 10⁻⁵ Liter der im wesentlichen gleichen Mischung, bestehend aus durch die Treibdüse geführter Treibstrahlmischung und durch die wenigstens eine Ansaugöffnung angesautem Mischungsstrom, durch den Impulsaustauschraum strömen.

17. Verfahren, um in eine in einem im wesentlichen abgeschlossenen Behälter mit der Maßgabe befindliche Flüssigkeit oder Mischung aus einer Flüssigkeit und einem feinteiligen Feststoff, dass die Flüssigkeit oder die Mischung das von einer fluiden Phase einnehmbare Innenvolumen des Behälters nur teilweise ausfüllt und das dabei verbleibende restliche einnehmbare Innenvolumen des Behälters von einer Gasphase ausgefüllt wird, eine andere Flüssigkeit oder eine andere Mischung einzumischen, umfassend ein Zuführen von der anderen Flüssigkeit oder der anderen Mischung in den Behälter als Treibstrahl einer im Behälter in der Flüssigkeit oder in der Mischung befindlichen, eine Treibdüse und einen Impulsaustauschraum, in den der Ausgang der Treibdüse zeigt, aufweisenden Strahldüse, **dadurch gekennzeichnet, dass** der Ansaugbereich zwischen Treibdüse und Impulsaustauschraum mit der Maßgabe mit einer wenigstens eine Ansaugöffnung aufweisenden Ummantelung versehen ist, dass die wenigstens eine Ansaugöffnung unterhalb des von der Treibdüse in den Impulsaustauschraum führenden zentralen Strahls liegt und beim Eintritt des aus der Treibdüse austretenden Treibstrahls in den Impulsaustausehraum über die wenigstens eine Ansaugöffnung von dem im Behälter gelagerten flüssigen Medium aus der Umgebung angesaugt wird.

18. Verfahren gemäß Anspruch 17, **dadurch gekennzeichnet, dass** die im Behälter befindliche Flüssigkeit eine wenigstens eine ethylenisch ungesättigte Gruppierung aufweisende Verbindung enthält und die als Treibstrahl zugeführte andere Flüssigkeit eine Inhibitorlösung ist, die mindestens 10 Gew.-% Phenothiazin, 5 bis 10 Gew.-% p-Methoxyphenol und mindestens 50 Gew.-% N-Methypyrrolidon enthält.

## Claims

1. A process for mixing a liquid or mixture of a liquid and a fine solid present in an essentially self-contained vessel, with the proviso that the liquid or mixture fills only part of the internal volume of the vessel occupiable by a fluid phase, and the remaining occupiable internal volume of the vessel is filled by a gas phase, comprising supply of essentially the same liquid or essentially the same mixture into the vessel as a motive jet of a jet nozzle which is disposed in the liquid or in the mixture in the vessel and has a motive nozzle and a momentum exchange chamber into which the outlet of the motive nozzle points, wherein the suction region between motive nozzle and momentum exchange chamber is provided with a sheath having at least one suction orifice, with the proviso that the at least one suction orifice is below the central jet which leads from the motive nozzle into the momentum exchange chamber and, on entry of the motive jet which exits from the motive nozzle into the momentum exchange chamber, the liquid medium stored in the vessel is sucked from the environment via the at least one suction orifice.

2. The process according to claim 1, wherein the at least one suction orifice is configured as at least one immersed tube which opens out from the sheath toward the vessel bottom.

3. The process according to either of claims 1 and 2, wherein a swirling motion is imparted to the motive jet before it passes through the motive nozzle.

4. The process according to any of claims 1 to 3, wherein the swirling motion is imparted with a swirl body installed upstream of the motive nozzle.

5. The process according to any of claims 1 to 3, wherein the swirling motion is imparted by supplying the motive liquid to the motive nozzle tangentially.

6. The process according to any of claims 1 to 5, wherein the motive jet is divided as it passes through the motive nozzle.

7. The process according to claim 6, wherein the motive nozzle is a screen nozzle or a slot nozzle.

8. The process according to any of claims 1 to 7, wherein the liquid comprises at least one of the organic compounds from the group comprising acrolein, methacrolein, acrylic acid, methacrylic acid, esters of acrylic acid and esters of methacrylic acid.

9. The process according to any of claims 1 to 7, wherein the liquid comprises N-vinylformamide.

10. The process according to claim 8 or 9, wherein the liquid comprises at least one dissolved polymerization inhibitor.

11. The process according to any of claims 1 to 10, wherein the gas phase comprises molecular oxygen.

12. The process according to any of claims 1 to 11, wherein the liquid or mixture fed into the vessel as a motive jet comprises a portion or the entirety of a portion of the liquid or mixture present in the vessel which has been withdrawn beforehand from the vessel.

13. The process according to any of claims 1 to 11, wherein the liquid or mixture fed into the vessel as a motive jet does not comprise a portion of the liquid or mixture present in the vessel which has been withdrawn beforehand from the vessel.

14. The process according to any of claims 1 to 13, wherein the liquid or mixture fed into the vessel as a motive jet has been conducted through a heat exchanger beforehand.

15. The process according to any of claims 1 to 14, wherein at least 10⁻⁵ liter per minute per liter of liquid present in the vessel of essentially the same liquid, consisting of motive jet liquid conducted through the motive nozzle and liquid stream sucked in through the at least one suction orifice, flows through the momentum exchange chamber.

16. The process according to any of claims 1 to 14, wherein at least 10⁻⁵ liter per minute per liter of mixture of a liquid and a fine solid present in the vessel of essentially the same mixture, consisting of motive jet mixture conducted through the motive nozzle and mixture stream sucked in through the at least one suction orifice, flows through the momentum exchange chamber.

17. A process for mixing another liquid or another mixture into a liquid or mixture of a liquid and a fine solid present in an essentially self-contained vessel, with the proviso that the liquid or mixture fills only part of the internal volume of the vessel occupiable by a fluid phase and the remaining occupiable internal volume of the vessel is filled by a gas phase, comprising supply of the other liquid or the other mixture into the vessel as a motive jet of a jet nozzle which is disposed in the liquid or in the mixture in the vessel and has a motive nozzle and a momentum exchange chamber into which the outlet of the motive nozzle points, wherein the suction region between motive nozzle and momentum exchange chamber is provided with a sheath having at least one suction orifice, with the proviso that the at least one suction orifice is below the central jet which leads from the motive nozzle into the momentum exchange chamber and, on entry of the motive jet which exits from the motive nozzle into the momentum exchange chamber, the liquid medium stored in the vessel is sucked from the environment via the at least one suction orifice.

18. The process according to claim 17, wherein the liquid present in the vessel comprises a compound having at least one ethylenically unsaturated moiety, and the other liquid supplied as a motive jet is an inhibitor solution which comprises at least 10% by weight of phenothiazine, from 5 to 10% by weight of p-methoxyphenol and at least 50% by weight of N-methylpyrrolidone.

## Revendications

1. Procédé pour le mélange d'un liquide ou d'un mélange d'un liquide et d'un solide finement divisé se trouvant dans un récipient essentiellement fermé, à condition que le liquide ou le mélange ne remplisse que partiellement le volume interne du récipient pouvant être occupé par une phase fluide et que le volume interne pouvant être occupé résiduel du récipient soit rempli par une phase gazeuse, comprenant une alimentation du liquide essentiellement identique ou du mélange essentiellement identique dans le récipient sous forme d'un jet propulseur d'un pulvérisateur à jet se trouvant dans le récipient, dans le liquide ou dans le mélange, présentant un injecteur et une chambre d'échange à impulsion dans laquelle se trouve la sortie de l'injecteur, **caractérisé en ce que** la zone d'aspiration entre l'injecteur et la chambre d'échange à impulsion est pourvue d'une enveloppe présentant au moins une ouverture d'aspiration, à condition que ladite au moins une ouverture d'aspiration se trouve sous le jet central allant de l'injecteur dans la chambre d'échange à impulsion et lors de l'entrée du jet propulseur sortant de l'injecteur dans la chambre d'échange à impulsion, le milieu liquide entreposé dans le récipient est aspiré de l'environnement via ladite au moins une ouverture d'aspiration.

2. Procédé selon la revendication 1, **caractérisé en ce que** ladite au moins une ouverture d'aspiration est réalisée comme au moins un tube immergé s'étendant de l'enveloppe jusqu'au fond du récipient.

3. Procédé selon l'une quelconque des revendications 1 ou 2, **caractérisé en ce qu'**un mouvement de torsion est imprimé au jet propulseur avant son passage dans l'injecteur.

4. Procédé selon l'une quelconque des revendications 1 à 3, **caractérisé en ce que** le mouvement de torsion est imprimé par un corps de torsion incorporé en amont de l'injecteur.

5. Procédé selon l'une quelconque des revendications 1 à 3, **caractérisé en ce que** le mouvement de torsion est imprimé **en ce que** le liquide propulseur est introduit tangentiellement dans l'injecteur.

6. Procédé selon l'une quelconque des revendications 1 à 5, **caractérisé en ce que** le jet propulseur est divisé lors du passage dans l'injecteur.

7. Procédé selon la revendication 6, **caractérisé en ce que** l'injecteur est un pulvérisateur à canaux multiples ou un pulvérisateur de répartition.

8. Procédé selon l'une quelconque des revendications 1 à 7, **caractérisé en ce que** le liquide contient au moins un des composés organiques du groupe comprenant l'acroléine, la méthacroléine, l'acide acrylique, l'acide méthacrylique, les esters de l'acide acrylique et les esters de l'acide méthacrylique.

9. Procédé selon l'une quelconque des revendications 1 à 7, **caractérisé en ce que** le liquide contient du N-vinylformamide.

10. Procédé selon la revendication 8 ou 9, **caractérisé en ce que** le liquide contient au moins un inhibiteur de polymérisation sous forme dissoute.

11. Procédé selon l'une quelconque des revendications 1 à 10, **caractérisé en ce que** la phase gazeuse contient de l'oxygène moléculaire.

12. Procédé selon l'une quelconque des revendications 1 à 11, **caractérisé en ce que** le liquide ou le mélange alimenté dans le récipient sous forme de jet propulseur comprend une partie ou la quantité totale d'une quantité partielle du liquide ou du mélange se trouvant dans le récipient, prélevée au préalable du récipient.

13. Procédé selon l'une quelconque des revendications 1 à 11, **caractérisé en ce que** le liquide ou le mélange alimenté dans le récipient sous forme de jet propulseur ne comprend pas de quantité partielle du liquide ou du mélange se trouvant dans le récipient, prélevée au préalable du récipient.

14. Procédé selon l'une quelconque des revendications 1 à 13, **caractérisé en ce que** le liquide ou le mélange alimenté dans le récipient sous forme de jet propulseur a été guidé au préalable au travers d'un échangeur thermique.

15. Procédé selon l'une quelconque des revendications 1 à 14, **caractérisé en ce que** chaque minute, par litre de liquide se trouvant dans le récipient, au moins 10⁻⁵ litre du liquide essentiellement identique, constitué par le liquide du jet propulseur guidé dans l'injecteur et par le flux liquide aspiré par ladite au moins une ouverture d'aspiration, s'écoule au travers de la chambre d'échange à impulsion.

16. Procédé selon l'une quelconque des revendications 1 à 14, **caractérisé en ce que** chaque minute, par litre de mélange se trouvant dans le récipient, constitué par un liquide et un solide finement divisé, au moins 10⁻⁵ litre du mélange essentiellement identique, constitué par du mélange du jet propulseur guidé dans l'injecteur et par le flux de mélange aspiré par ladite au moins une ouverture d'aspiration, s'écoule dans la chambre d'échange à impulsion.

17. Procédé pour introduite en mélangeant, dans un liquide ou un mélange d'un liquide et d'un solide finement divisé se trouvant dans un récipient essentiellement fermé, à condition que le liquide ou le mélange ne remplisse que partiellement le volume interne du récipient pouvant être occupé par une phase fluide et que le volume interne pouvant être occupé résiduel du récipient soit rempli par une phase gazeuse, un autre liquide ou un autre mélange, comprenant une alimentation de l'autre liquide ou de l'autre mélange dans le récipient sous forme d'un jet propulseur d'un pulvérisateur à jet se trouvant dans le récipient, dans le liquide ou dans le mélange, présentant un injecteur et une chambre d'échange à impulsion dans laquelle se trouve la sortie de l'injecteur, **caractérisé en ce que** la zone d'aspiration entre l'injecteur et la chambre d'échange à impulsion est pourvue d'une enveloppe présentant au moins une ouverture d'aspiration, à condition que ladite au moins une ouverture d'aspiration se trouve sous le jet central allant de l'injecteur dans la chambre d'échange à impulsion et que lors de l'entrée du jet propulseur sortant de l'injecteur dans la chambre d'échange à impulsion, le milieu liquide entreposé dans le récipient est aspiré de l'environnement via ladite au moins une ouverture d'aspiration.

18. Procédé selon la revendication 17, **caractérisé en ce que** liquide se trouvant dans le récipient contient un composé présentant au moins un groupe éthyléniquement insaturé et l'autre liquide alimenté comme jet propulseur est une solution d'inhibiteur, qui contient au moins 10% en poids de phénothiazine, 5 à 10% en poids de p-méthoxyphénol et au moins 50% en poids de N-méthylpyrrolidone.
